# EUROPÄISCHE PATENTSCHRIFT

(11) **EP 3 510 904 B1**
(45) Veröffentlichungstag und Bekanntmachung des Hinweises auf die Patenterteilung: **19.08.2020**
(21) Anmeldenummer: 19150454.7
(22) Anmeldetag: 07.01.2019
(51) Int. Cl.: A47J 45/06, A47J 37/10, A62C 3/00, A62C 13/00, A62C 37/40

(54) **BRATVORRICHTUNG MIT EINEM HANDGRIFF UND EINER BRANDLÖSCHEINRICHTUNG**
FRYING DEVICE WITH A HANDLE AND A FIRE EXTINGUISHING MEANS
DISPOSITIF DE RÔTISSERIE EQUIPPÉ AVEC UNE POIGNÉE ET UN DISPOSITIF D'EXTINCTION

(30) Priorität: 15.01.2018 DE 102018100733
(43) Veröffentlichungstag der Anmeldung: 17.07.2019
(73) Patentinhaber: Dangel, Jürgen, 88512 Mengen-Rulfingen (DE)
(72) Erfinder: Dangel, Jürgen, 88512 Mengen-Rulfingen (DE)
(74) Vertreter: Otten, Roth, Dobler & Partner mbB Patentanwälte

(56) Entgegenhaltungen:
- EP-A1- 0 766 942
- CN-U- 207 323 346
- DE-T2- 69 907 524
- DE-U1-202016 107 466
- US-A- 2 204 467

## Beschreibung

Die Erfindung betrifft eine Bratvorrichtung mit einem Handgriff und einem Bratkörper nach dem Oberbegriff des Anspruchs 1.

### Stand der Technik

Bislang ist bereits unterschiedlichstes Kochgeschirr für die Zubereitung von Nahrungsmitteln gebräuchlich. So werden vor allem zum Braten unterschiedlichste Bratpfannen oder Töpfe verwendet. Üblicherweise zeichnen sich Bratpfannen vor allem dadurch aus, dass diese im Vergleich zu einem Topf relativ flach ausgebildet sind, das bedeutet, dass die Seitenwände der Bratpfanne niedriger sind, als bei einem relativ hohen Kochtopf.

Meist haben Bratpfannen auch einen vergleichsweise langen Handgriff, an dessen Ende der Bratkörper mit der Bratfläche angeordnet ist. Auch sind Kochtöpfe sowie Bratpfannen mit zwei Griffen bereits im Einsatz.

Zudem sind aus der US 2,204,467 sowie EP 0 766 942 A1 bereits Bratpfannen bekannt, wobei im Handgriff ein Vorratsspeicher für Öl als Betriebshilfsmittel vorhanden ist, das über die Seitenwand bzw. eine Dosieröffnung in den Bratkörper bzw. auf die erwärmbare Bratfläche ausfliesen kann. Hiermit wird ein separates Einbringen eines Fettstückchens oder von Bratöl mittels einer separaten Vorratsflasche entbehrlich.

Diese Bratpfannen mit integrierter Bratölspeicherung haben sich jedoch auf dem Markt nicht durchgesetzt, da das Einbringen des Bratöls prinzipiell dem Einbringen des Bratöls mittels separater Vorratsflasche entspricht, jedoch ein regelmäßiges Nachfüllen des Speichers im Handgriff bedarf. Zudem ist aus der zwischenveröffentlichten CN 207 323 346 U eine Pfanne mit einem elastischen und händisch bedienbaren Flüssigkeitsspeicher im Handgriff bekannt geworden.

Darüber hinaus ist jedoch bereits aus der EP 0 931 496 A1 bzw. DE 699 07 524 T2 eine Bratpfanne mit integriertem IR-Sensor zur Erfassung der Temperatur der beheizbaren Bratfläche bekannt. Hiermit wird ein Anzeige- oder Warnsystem realisiert, das einerseits die Temperatur anzeigt, um das Braten zu verbessern. Andererseits soll hiermit bei Gefahr einer Überhitzung der Bratfläche bzw. der Nahrungsmittel oder bei Gefahr eines Brandes bzw. sogar bei einem Brand den Nutzer (akustisch oder optisch) warnt bzw. alarmiert.

Des Weiteren ist aus der DE 20 2016 107466 U1 eine Bratvorrichtung bekannt, bei der der Handgriff eine Dosiereinrichtung für ein Betriebshilfsmittel aufweist, welche optional auch einen Druckgasspeicher beinhalten kann, wobei das Betriebshilfsmittel auch ein Löschmittel sein kann. Die Dosieröffnung befindet sich hierbei jedoch nicht an einer Außenfläche des Handgriffs.

### Aufgabe und Vorteile der Erfindung

Aufgabe der Erfindung ist es demgegenüber, eine Bratvorrichtung zum Braten von Nahrungsmitteln vorzuschlagen, die die Sicherheit erhöht, insbesondere bei einem Brand des Nahrungsmittels deutlich höhere Sicherheitsanforderungen erfüllt.

Diese Aufgabe wird, ausgehend von einer Bratvorrichtung der eingangs genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Bratvorrichtung dadurch aus, dass wenigstens ein Druckgasspeicher zur Druckbeaufschlagung des Löschhilfsmittels vorgesehen ist. Hiermit kann besonders schnell bzw. effektiv und insbesondere auch eine besonders vorteilhafte Verdüsung/Vernebelung des Löschmittels verwirklicht werden.

In einer bevorzugen Variante der Erfindung ist der Druckgasspeicher als Löschmittelspeicher ausgebildet. So kann beispielsweise Kohlendioxid (CO₂) zum Löschen eines Brandes im Bratkörper verwendet werden. Dementsprechend kann das mit Druck beaufschlagte Kohlendioxid zum Löschen eines Brandes verwendet werden.

Mit Hilfe des Löschmittelspeichers sowie der Löschmittelöffnung gemäß der Erfindung kann in vorteilhafter Weise ein Brand gelöscht werden. Teilweise können sich nämlich das Nahrungsmittel und/oder das Brathilfsmittel beim Braten entzünden, was von großem Nachteil bzw. sehr gefährlich ist. Derartige Brände innerhalb des Bratkörpers können durch ein erfindungsgemäßes Löschmittel ohne großen Aufwand gelöscht werden, was die Betriebssicherheit der Bratvorrichtung deutlich erhöht.

Es ist denkbar, dass in einer besonderen Variante der Erfindung der Handgriff wenigstens eine die Dosieröffnung bzw. Austrittsöffnung umfassende Löschvorrichtung aufweist, die in vorteilhafter Weise einerseits separat zum Bratkörper ausgebildet ist und andererseits sich wenigstens teilweise in vertikaler Richtung (nach oben) erstreckt bzw. erhebt. Beispielsweise umfasst der Handgriff einen Löschanbau bzw. eine fest fixierte/angeordnete Erhebung, die die Dosieröffnung bzw. Austrittsöffnung umfasst. Hiermit kann das Löschmittel bevorzugt (schräg/winklig) von oben nach unten in Richtung Bratfläche bzw. in der Bratkörper hinein strömen/geleitet werden, so dass der Brand bzw. Flammen gelöscht werden können.

Grundsätzlich wird im Gegensatz zum im Wesentlichen horizontalen Ein-/Ausströmen des Löschmittels bzw. Löschen durch eine vorteilhafte Löschrichtung/-strömung wenigstens teilweise von oben nach unten, d.h. schräg/winklig bzw. wenigstens teilweise vertikal im Sinn der Erfindung, ein Ausblasen der Nahrungsmittel und/oder ein horizontales Verdrängen/Verblasen der Flammen, ggf. einschließlich glühender oder brennender Partikel/Bestandteile, wirkungsvoll verhindert. Dementsprechend wird ein Überschlagen der Flammen bzw. des Brandes auf benachbarte (ggf. brennbare) Gegenstände wirkungsvoll verhindert, was eine besonders hohe Sicherheit im Brandfall bedeutet.

Im Sinn der Erfindung umfasst ein wie z.B. zuvor beschriebener Anbau bzw. Aufbau des Handgriffes bzw. entspr. Erhebung des Handgriffes etc., d.h. im Wesentlichen der/die direkt am Handgriff angeordnet bzw. fest fixiert und separat zum Bratkörper bzw. zur Seitenwand der Bratvorrichtung gemäß der Erfindung ausgebildet ist, die Außenfläche des Handgriffes gemäß der Erfindung und somit die Dosieröffnung bzw. Austrittsöffnung für das Löschmittel. Das bedeutet, dass im Sinn der Erfindung ein derartiger Anbau bzw. Aufbau des Handgriffes bzw. eine entspr. Erhebung des Handgriffes etc. ein (integraler) Bestandteil des Handgriffes ist. Im Sinn der Erfindung ist eine Fläche zwischen Handgriff und Bratkörper bzw. Seitenwand eine Innen- bzw. Kontaktfläche, die im Wesentlichen nicht vom Benutzer im normalen Betriebszustand von außen sichtbar ist.

Alternativ oder in Kombination zur vorgenannten Erhebungs- bzw. Aufbau-/Anbau-Variante ist wenigstens eine Verstelleinheit zum Verstellen wenigstens eines Teils des Handgriffes vorgesehen. Hiermit kann in vorteilhafter Weise die Dosieröffnung bzw. Austrittsöffnung und/oder Löschvorrichtung in eine besonders vorteilhafte Löschposition verstellt/gebracht werden, so dass beim bzw. für den Löschvorgang bzw. für das Löschen das Löschmittel aus der Dosieröffnung bzw. Austrittsöffnung und/oder Löschvorrichtung in einer besonders vorteilhaften Position/Stelle ausströmt/austritt. Wie zuvor bereits dargelegt ist hier eine erhobene bzw. erhöhte Position/Stellung von besonderem Vorteil für das Löschen.

Das bedeutet im Wesentlichen, dass die Dosieröffnung bzw. Austrittsöffnung und/oder Löschvorrichtung in einer ersten bzw. sog. "normalen" Betriebsstellung/-position an einer sog. "unteren" Stellung/Position angeordnet ist, d.h. der Handgriff ist im Allgemeinen gemäß bislang bekannter Pfannenhandgriffe positioniert. In einer zweiten bzw. sog. oberen" Stellung/Position ist der Handgriff und/oder ein Teil des Handgriffes im Gegensatz zu bislang bekannten starren Pfannenhandgriffen in einer (in vertikaler Richtung betrachtet) erhobenen/angehobenen Löschstellung/-position angeordnet/positioniert.

Gegebenenfalls kann wenigstens der verstellbare Teil des Handgriffes und/oder der gesamte Handgriff umgebogen oder sogar abgenommen bzw. vom Bratkörper gelöst/abgetrennt werden. Hiermit kann die Verstellung im Sinn der Erfindung verwirklicht werden, d.h. um die Löschstellung/-position der Dosieröffnung bzw. Austrittsöffnung und/oder Löschvorrichtung einzunehmen.

Vorzugsweise weist die Verstelleinheit wenigstens eine Schwenkachse zum Verschenken wenigstens des verstellbaren Teils des Handgriffes auf. Vorteilhafterweise kann wenigstens der verstellbare Teil des Handgriffes und/oder der gesamte Handgriff um die Schwenkachse verschwenkt bzw. umgeklappt werden. Beispielsweise ist die Verstelleinheit als Gelenk und/oder Scharnier oder dergleichen ausgebildet. Hiermit kann der konstruktive und somit wirtschaftliche Aufwand für die erfindungsgemäße Verstellung besonders stark reduziert bzw. optimiert werden.

In einer bevorzugten Ausführungsform der Erfindung ist die Verstelleinheit derart ausgebildet ist, dass der verstellbare Teil des Handgriffes wenigstens teilweise in vertikaler Richtung verstellbar. Mit dieser Maßnahme wird erreicht, dass wie oben bereits kurz dargelegt die Dosieröffnung bzw. Austrittsöffnung und/oder Löschvorrichtung in einer ersten bzw. sog. "normalen" Betriebsstellung/-position an einer sog. "unteren" Stellung/Position angeordnet ist und in einer zweiten bzw. sog. oberen" Stellung/Position ist der Handgriff und/oder der verstellbare Teil des Handgriffes in einer (in vertikaler Richtung betrachtet) erhobenen/angehobenen Löschstellung/-position angeordnet/positioniert.

Da Pfannen üblicherweise vergleichsweise "lange" Handgriffe aufweisen, kann durch ein Verstellen, insb. durch das Verschwenken des Handgriffes bzw. eine Großteils des Handgriffes eine besonders hohe Löschstellung/-position der Dosieröffnung bzw. Austrittsöffnung und/oder Löschvorrichtung verwirklicht werden. Dementsprechend kann die vorteilhafte Löschrichtung/-strömung des Löschmittels in besonders vorteilhafter Weise von oben nach unten erfolgen/ausgerichtet werden, d.h. schräg/winklig z.B. mit einem zur Horizontalen betrachteten Winkel von ca. 45° bis ca.90°, insb. ca. 60° bis ca. 80°. Dies ist für ein besonders starkes bzw. kräftiges Einblasen des Löschmittels/Löschfluides von besonderem Vorteil.

In einer besonderen Weiterbildung der Erfindung weist der Handgriff wenigstens eine erste, am Bratkörper angeordnete Endhälfte und eine zweite, freie Endhälfte auf, wobei wenigstens die zweite, freie Endhälfte die Austritts-/ Dosieröffnung umfasst. Dementsprechend ist die Dosieröffnung bzw. Austrittsöffnung und/oder Löschvorrichtung am in Löschposition/-stellung oberen Ende des Handgriffes positioniert/angeordnet werden, so dass diese besonders weit oben ist, um das Löschmittel möglichst optimal auf den Brand bzw. die Flammen zu richten/strömen.

Vorzugsweise umfasst die Dosiereinheit wenigstens eine Betätigungsvorrichtung zum Betätigen der Brandlöschung und/oder zum Betätigen des Ausströmens des Löschmittels. Hiermit kann das Löschen bzw. der Löschvorgang in vorteilhafter Weise z.B. vom Benutzer der erfindungsgemäßen Bratvorrichtung manuell ausgelöst bzw. generiert werden.

Generell ist jedoch auch eine automatisierte bzw. halbautomatische Betätigung der Brandlöschung bzw. des Ausströmens des Löschmittels und/oder des Verstellens des Handgriffes bzw. eines Teils des Handgriffes denkbar.

Gegebenenfalls kann eine (elektrische und/oder elektronische) sensorgesteuerte und/oder mechanische und/oder pneumatische und/oder hydraulische Betätigung bzw. Betätigungsvorrichtung vorgesehen werden. Beispielsweise kann eine Betätigung mittels Wärmeausdehnung bzw. Temperaturänderung verwirklicht werden, z.B. mit einem Bimetall, einer Flüssigkeit, einem Gel, einer Formgedächtnislegierung bzw. sog. "Memorymetall" oder dergleichen.

In einer vorteilhaften Variante der Erfindung ist die Betätigungsvorrichtung zugleich als die Verstelleinheit, insb. als verschwenkbare Verstelleinheit ausgebildet. Das bedeutet, dass durch das Verstellen/Verschwenken des Handgriffes bzw. eines Teils des Handgriffes zugleich der Löschvorgang ausgelöst wird bzw. das Löschmittel in vorteilhafter Weise aus der Dosieröffnung bzw. Austrittsöffnung und/oder Löschvorrichtung ausströmt. Beispielsweise erfolgt das Betätigen erst in einer Endstellung des verstellbaren/verschwenkbaren Handgriffes. So ist in vorteilhafter Weise sichergestellt, dass das Löschmittel erst in möglichst optimaler/oberster/höchster Stellung/Position (des verstellbaren Handgriffes) ausströmt und den Brand bzw. die Flammen löscht.

Vorteilhafterweise weist die Dosier-/Löscheinheit bzw. Löschvorrichtung wenigstens eine die Austritts-/Dosieröffnung aufweisende Spraydüse zum Versprayen bzw. Vernebeln des Löschmittels auf. Hiermit können Löschfluide wie ein Löschgas, ein Löschschaum oder eine Löschflüssigkeit in vorteilhafter Weise verteilt bzw. aufgefächert werden, um möglichst auf/in den/die gesamten Bratkörper bzw. Bratfläche verteilt zu werden. Damit kann der Brand in der Pfanne bzw. im Bratkörper wirkungsvoll gelöscht werden.

Generell können als Löschmittel verschiedene Fluide bzw. Gase (ggf. auch kombiniert), die zum Löschen eines Brandes im Bratkörper geeignet sind, z.B. Kohlendioxid, Druckluft, Löschschaum, Löschwasser etc., verwendet und/oder versprüht, verdüst bzw. vernebelt werden.

Vorzugsweise ist wenigstens ein Sensor, insb. Temperatur- bzw. Brand-Sensor, zur Erfassung eines Brandes und/oder einer Temperatur z.B. im Bratkörper vorgesehen. Beispielsweise kann durch einen Infrarot-Temperatursensor bzw. Thermometer, Bimetallelement oder dergleichen festgestellt werden, dass in der Pfanne bzw. im Bratkörper die Gefahr eines Brandes bzw. eine zu hohe Temperatur besteht, so dass ein Löschen hierdurch (automatisiert oder manuell) ausgelöst und/oder mittels eines Signal- oder Anzeigeelementes angezeigt/signalisiert wird. Beispielsweise kann eine Noteinheit bzw. die Betätigungseinheit gemäß der Erfindung vorgesehen werden, insbesondere ein Notknopf, die/der beispielsweise bei einem Brand im Bratkörper vom Nutzer betätigt/gedrückt wird, so dass das Löschmittel aus dem Löschmittelspeicher in vorteilhafter Weise in den Bratkörper eingebracht werden kann.

Vorteilhafterweise ist eine erste Temperatur bzw. eine Warntemperatur vorgesehen, wobei ein Warnsignal mittels eines Signal- oder Anzeigeelementes angezeigt/signalisiert wird. Bevorzugt ist ein Signaltongenerator wie ein Signalhorn oder dergleichen zur Erzeugung eines Signaltons vorgesehen. Hiermit wird erreicht, dass in vorteilhafter Weise ein strömendes Gas wie Luft und/oder Druckgas zur Tongenerierung verwendbar ist.

Von besonderem Vorteil ist, eine Signaltoneinheit vorzusehen, die den Druckgasspeicher und ein Signaltongenerator umfasst. So kann der Druckgasspeicher zusätzlich zur akustischen Warnung/Signalisierung einer Beeinträchtigung bzw. einer Brandgefahr oder eines Brandes verwendet werden. Durch diese vorteilhafte fluidische bzw. pneumatische Signalisierung kann auf elektrische Komponenten wie Signalleuchten und elektrische Batterien etc. verzichtet werden.

Gegebenenfalls kann der Sensor das Löschen aktivieren, wenn dieser beispielsweise eine Temperatur von ca. 400°C erfasst.

In einer vorteilhaften Variante der Erfindung wird ein auswechselbarer Löschmittelspeicher und/oder Druckgasspeicher verwendet, so dass nach dem Entleeren des Löschmittelspeichers und/oder Druckgasspeichers ein neuer Löschmittelspeicher und/oder Druckgasspeicher ohne großen Aufwand wieder verwendet werden kann. Vorzugsweise ist der Löschmittelspeicher und/oder Druckgasspeicher im Handgriff, insbesondere am Endabschnitt des Handgriffes angeordnet bzw. integriert, der dem Bratkörper bzw. der Bratfläche entgegengerichtet ist. Hierdurch kann beispielsweise der Löschmittelspeicher und/oder Druckgasspeicher durch eine stirnseitige Kappe, ein Deckel, insbesondere ein Rast- oder Schraubdeckel oder dergleichen, ausgetauscht bzw. ausgewechselt werden und in vorteilhafter Weise fixiert werden.

Vorteilhafterweise ist wenigstens eine Kühleinheit zum Kühlen des Handgriffes und/oder des Bratkörpers und/oder der Bratfläche und/oder der Seitenwand und/oder der Nahrungsmittel vorgesehen. Hiermit kann eine vorteilhafte Wirkung gerade im Brandfall erzeugt werden. Beispielsweise wird verhindert, dass im Brandfall bzw. bei Überhitzung u.a. der Handgriff für den Nutzer zu heiß wird und dieser sich die Finger/Hände verbrennen würde. Folglich kann ein unbeabsichtigtes Fallenlassen der einen Brand umfassenden Bratvorrichtung und somit ein Ausbreiten des Brandes auf den Boden etc. wirkungsvoll verhindert werden. Dies erhöht zusätzlich die Sicherheit der Bratvorrichtung gemäß der Erfindung in erheblichem Maß.

Vorzugsweise umfasst die Kühleinheit wenigstens den Druckgasspeicher. Hiermit kann eine Doppelnutzung des Druckgasspeichers verwirklicht werden, was in vorteilhafter Weise den Aufwand reduziert. So macht sich diese Maßnahme zunutze, dass beim Entleeren auftretende Abkühlen des Druckgasspeichers zur Kühlung wenigstens eines Teils der erfindungsgemäßen Bratvorrichtung verwendet wird, z.B. des Bratkörpers und/oder des Hangriffes.

Gegebenenfalls ist wenigstens ein thermisches Isolierelement zum thermischen Isolieren des Druckgasspeichers vorgesehen. Beispielsweise ist dies als eine Dämmschicht und/oder thermische Reflexionsschicht/-folie oder dergleichen ausgebildet. Hiermit kann der Druckgasspeicher in vorteilhafter Weise vor Wärme/Hitze geschützt und/oder das beim Entleeren auftretende Abkühlen des Druckgasspeichers kann gegenüber dem Handkontakt gedämmt/abgeschirmt werden, so dass beim Nutzer kein nachteiliges Kältegefühl am Handgriff entsteht.

In einer vorteilhaften Ausführungsform der Erfindung ist wenigstens ein Brathilfsmittelspeicher zum Speichern eines Brathilfsmittels und insbesondere eine Dosiereinheit zum Zudosieren des Brathilfsmittels in den Bratkörper vorgesehen. Hiermit ist ein separates Zudosieren von Brathilfsmittel wie Bratöl/-fett oder dergleichen entbehrlich.

Vorteilhafterweise umfasst die Dosiereinheit wenigstens eine Verteileinheit zum Verteilen des Brathilfsmittels, wobei der Bratkörper und/oder wenigstens die Seitenwand zumindest drei, d.h. mehrere, auf zumindest ein Drittel der Fläche verteilt angeordnete Dosieröffnungen aufweist. Mit Hilfe einer derartigen Verteilereinheit mit zumindest drei und/oder mehreren, auf zumindest einem Drittel des Umfangs verteilt angeordneten Dosieröffnungen wird erreicht, dass das Brathilfsmittel, insbesondere Bratöl oder dergleichen, an zumindest drei bzw. mehreren separaten Stellen bzw. Bereichen/Abschnitten der Bratfläche und nicht nur an einer einzigen Stelle bzw. einem kleinen Bereich der Bratfläche eingebracht wird, d.h. wie beim Stand der Technik einerseits lediglich im Bereich des Handgriffes oder andererseits an genau der Stelle an der die Bratölflasche entleert wird bzw. ein Fettstück auf die Bratfläche aufgebracht wird. Demzufolge wird durch die vorteilhafte Verteilung bzw. die zumindest drei/mehreren Dosieröffnungen erreicht, dass sich das Brathilfsmittel, insbesondere Bratöl, über eine vergleichsweise große Fläche der gesamten Bratfläche verteilt bzw. gleichmäßiger aufgebracht wird. Durch die gleichmäßigere Verteilung des Brathilfsmittels, das vom Speicher im Handgriff in den Bratkörper bzw. auf die Bratfläche, insb. auf den Pfannenboden, entleert/eingebracht wird, reduziert sich der Aufwand für den Benutzer bzw. erhöht sich der Komfort für den Benutzer. Darüber hinaus wird ein besseres Bratergebnis, insbesondere eine schnelle, gleichmäßige Verteilung des Brathilfsmittels im Bratkörper bzw. auf der gesamten Bratfläche, insb. Pfannenboden erreicht, so dass sich das Braten des Nahrungsmittels verbessert.

Vorzugsweise weist die Verteilereinheit zumindest drei bzw. mehrere, auf zumindest zwei Drittel des Umfangs der Bratfläche angeordnete Dosieröffnungen des Bratkörpers und/oder der Seitenwand auf bzw. sind sogar mehrere, im Wesentlichen über den gesamten Umfang der Bratfläche angeordnete Dosieröffnungen vorgesehen. Hiermit wird die Verteilung des Brathilfsmittels über die gesamte Bratfläche weiter verbessert. So kann nicht nur eine besonders gleichmäßige Verteilung des Brathilfsmittels gemäß der Erfindung erreicht werden, sondern gerade aufgrund dieser besonders gleichmäßigen Verteilung kann auch die Menge des Brathilfsmittels reduziert/minimiert werden. So kann nahezu über die gesamte Bratfläche ein vergleichsweise dünner Brathilfsmittelfilm mit Hilfe der vorteilhaften, mehreren bzw. zahlreichen Dosieröffnungen gemäß der Erfindung realisiert werden. Dies führt zu einer besonders gesundheitlich vorteilhaften Zubereitung des Nahrungsmittels.

In einer besonderen Weiterbildung der Erfindung weist die Verteilereinheit und/oder die Seitenwand wenigstens einen Ringkanal auf. Im Sinn der Erfindung umfasst die Verteilereinheit in vorteilhafter Weise den wenigstens einen Ringkanal und zumindest die wenigstens drei bzw. mehreren Dosieröffnungen. Das bedeutet, dass der wenigstens eine Ringkanal in vorteilhafter Weise mit den wenigstens drei Dosieröffnungen (strömungstechnisch bzw. fluidisch) verbunden ist.

Mit Hilfe eines derartigen Ringkanals der Verteilereinheit und/oder der Seitenwand kann eine Zuführung des Brathilfsmittels zu den zumindest drei bzw. mehreren Dosieröffnungen, insbesondere die auf zwei Drittel oder im Wesentlichen auf dem gesamten Umfang der Bratfläche verteilt angeordnet sind, in vorteilhafter Weise erfolgen. So kann das Brathilfsmittel vom Handgriff bzw. vom Speicher im Handgriff durch den wenigstens einen Ringkanal, der vorzugsweise in der Seitenwand angeordnet ist, von außen bzw. umfangseitig über die Bratfläche verteilt werden. Das Einströmen bzw. Einfließen oder dergleichen des Brathilfsmittels über diese zumindest drei bzw. mehreren Dosieröffnungen, die außen bzw. umfangsseitig an der Bratfläche verteilt angeordnet sind, verbessert die gleichmäßige Verteilung des Brathilfsmittels, insbesondere des Bratöls oder dergleichen in besonderer Weise.

In einer besonderen Weiterbildung der Erfindung weist die Seitenwand wenigstens zwei, in vertikaler Richtung übereinander angeordnete Ringkanäle auf. Hiermit kann die Verteilung des Brathilfsmittels nochmals deutlich verbessert werden. Zum Beispiel können die wenigstens zwei oder mehrere und in vertikaler Richtung betrachtet übereinander in der Seitenwand auf unterschiedlichen Ebenen angeordnete Ringkanäle jeweils zumindest drei bzw. mehrere Dosieröffnungen aufweisen.

Vorzugsweise sind die zumindest drei bzw. mehrere Dosieröffnungen des unteren, ersten Ringkanals in Umfangsrichtung (betrachtet) versetzt zu den zumindest drei bzw. mehrere Dosieröffnungen des oberen bzw. darüber/benachbart angeordneten, zweiten bzw. weiteren Ringkanals angeordnet. So kann das umfangseitige Verteilen des Brathilfsmittels nochmals deutlich verbessert bzw. vergleichmäßigt bzw. besser verteilt/dosiert werden, was sich auf das Bratergebnis positiv auswirkt.

Vorzugsweise sind die Dosier- bzw. die Strömungsrichtungen des Brathilfsmittels der Ringkanäle, insb. des unteren, ersten Ringkanals und/oder des oberen bzw. darüber/benachbart angeordneten, zweiten bzw. weiteren Ringkanals, unterschiedlich ausgerichtet. Vorzugsweise ist die vertikale Neigung der Ringkanäle wenigstens teilweise unterschiedlich ausgerichtet und/oder einstellbar, insb. des unteren, ersten Ringkanals und/oder des oberen bzw. darüber/benachbart angeordneten, zweiten bzw. weiteren Ringkanals.

Vorteilhafterweise ist ein erster Winkel bzw. eine erste Neigung und/oder Dosier- bzw. Strömungsrichtung der Dosieröffnungen des oberen bzw. zweiten Ringkanals steiler als ein zweiter Winkel bzw. eine zweite Neigung und/oder Dosier- bzw. Strömungsrichtung der Dosieröffnungen des unteren bzw. ersten Ringkanals. Das bedeutet, dass ein etwas in vertikaler Richtung höherer bzw. oben angeordneter Ringkanal in vorteilhafter Weise von oben bzw. das Brathilfsmittel in vergleichsweise steiler bzw. relativ schräger Neigung in den Brat-/Innenraum bzw. auf die Bratfläche dosiert/eindüst bzw. einströmen lässt.

In einer bevorzugten Variante der Erfindung weist wenigstens eine der Dosieröffnungen, insbesondere alle Dosieröffnungen jeweils eine Sprühdüse zum Versprühen bzw. zum Vernebeln des Brathilfsmittels auf. Durch das Versprühen bzw. Vernebeln des Brathilfsmittels, insbesondere des Bratöls, wird eine besonders gleichmäßige Verteilung des Brathilfsmittels über der gesamten Bratfläche erreicht. So können beispielsweise bei vier, fünf, sechs oder mehreren Dosieröffnungen mit Spray-Funktion bzw. mit einer Spraydüse gemäß der Erfindung eine sehr gleichmäßige Einbringung des Brathilfsmittels über die gesamte Bratfläche erreicht werden. Hiermit wird die Menge des Brathilfsmittels, die notwendig ist um die gesamte Bratfläche gleichmäßig zu belegen, noch weiter reduzierbar.

Auch kann durch das Einsprühen/Vernebeln des Brathilfsmittels während dem Braten ein vorteilhaftes Nachdosieren, insbesondere mit minimierten Mengen des Brathilfsmittel, dazu führen, dass die Zubereitung des Nahrungsmittels bzw. das Anbraten weiter verbessert wird und insbesondere sehr geringe Brathilfsmittelmengen verbraucht werden. Dies führt zu einer besonders schonenden bzw. gesundheitlich vorteilhaften Zubereitung des Nahrungsmittels ohne große Öl- bzw. Fettmengen oder dergleichen.

So ist beispielsweise eine vorteilhafte Druckerzeugungseinheit zum Druckbeaufschlagen des Brathilfsmittels für ein Versprühen bzw. Vernebeln vorgesehen. Beispielsweise kann es sich um eine mechanische Druckerzeugungseinheit, insbesondere eine mechanische, manuelle Pumpeinheit handeln, die beispielsweise am/im Handgriff angeordnet ist und vom Nutzer der Bratvorrichtung (beim Halten des Handgriffes) betätigt werden kann. So kann der Nutzer beispielsweise bei Halten der Bratvorrichtung jeweils einen Sprühdruck und somit ein Dosieren des Brathilfsmittels mit nur einer Hand generieren. Hierdurch ist die zweite Hand beispielsweise frei für einen Pfannenwender bzw. ein zusätzliches Kochhilfsmittel zum Wenden des Nahrungsmittels in der Bratpfanne oder dergleichen. Auch dies verbessert den Komfort für den Nutzer.

Vorteilhafterweise ist wenigsten ein Druckgasspeicher zur Durchbeaufschlagung des Brathilfsmittels vorgesehen. Mit Hilfe eines derartigen Druckgasspeichers kann ein vergleichsweise hoher Druck zum Vernebeln/Verdüsen des Brathilfsmittels generiert werden, so dass besonders kleine Brathilfsmitteltröpfchen bzw. eine sehr feine Vernebelung des Brathilfsmittels realisiert werden können. Dies verbessert zusätzlich das Einbringen des Brathilfsmittels über die gesamte Bratfläche.

Vorzugsweise wird dieser Druckgasspeicher zugleich als Löschmitteldruckgasspeicher ausgebildet. Beispielsweise wird das mit Druck beaufschlagte Kohlendioxid zum Löschen eines Brandes verwendet und andererseits zum Sprühen bzw. Vernebeln des Brathilfsmittels im Normalbetrieb bzw. beim Braten und/oder zum Reinigen der Dosiereinheit/Verteilereinheit. Durch die Doppel-/Mehrfachfunktion des Druckgasspeichers zugleich u.a. als Löschmittelspeicher wird sowohl der konstruktive Aufwand reduziert als auch die Funktionalität der Bratvorrichtung gemäß der Erfindung deutlich erhöht.

Beispielsweise ist eine Umgehung bzw. ein Bypass oder dergleichen vorgesehen, wobei zum Löschen eines Brandes das Löschmittel durch die Verteileinheit bzw. das Verteilersystem mit Ringkanal, Dosieröffnungen, Sprühdüsen, etc. ohne Brathilfsmittel eingebracht/eingeströmt wird.

Auch kann das Löschmittel zugleich als Reinigungsmittel im Sinn der Erfindung ausgebildet werden.

Vorzugsweise ist wenigstens ein auswechselbarer Reinigungsmittelspeicher zur Reinigung der Verteileinheit und/oder Dosiereinheit vorgesehen. Hiermit wird erreicht, dass nach dem Braten des Nahrungsmittels eine vorteilhafte Reinigung realisierbar ist, insbesondere der Verteilereinheit einschließlich der Kanäle, Düsen oder dergleichen. So kann beispielsweise ein flüssiges Reinigungsmittel durch das Verteilersystem bzw. die Verteileinheit, Ringkanäle etc. hindurchströmen und somit eine vorteilhafte Reinigung/Entleerung des Verteilungssystems erreichen. So kann eine Reinigungsflüssigkeit z.B. Tenside oder dergleichen umfassen.

Darüber hinaus ist auch eine Reinigung mit Hilfe eines Reinigungsgases von Vorteil. So kann mit Hilfe von Druckluft, Kohlendioxid (CO₂) oder dergleichen mit vergleichsweise hoher Strömungsgeschwindigkeit des Brathilfsmittels aus dem Verteilersystem, Ringkanal, Dosieröffnungen bzw. Sprühdüse herausgedrängt bzw. gereinigt/entleert werden.

Auch kann beispielsweise der Durckgasspeicher gemäß der Erfindung zugleich als Reinigungsmittelspeicher ausgebildet werden. Beispielsweise kann mit Hilfe einer Betätigungsvorrichtung bzw. eines Bypasses oder dergleichen erreicht werden, dass in einem Reinigungsvorgang nicht Brathilfsmittels aus dem Speicher durch das Verteilersystem bzw. die Verteilereinheit, Ringkanals, Dosieröffnungen, Sprühdüsen hindurchströmen kann, sondern dass der Druckgasspeicher ein Reinigungs-/Druckgas durch das Verteilersystem hindurch strömen lässt, womit eine vorteilhafte Reinigung erreicht wird. Durch die Umgehung des Brathilfsmittelspeichers kann somit eine vorteilhafte Reinigung des Verteilersystems bzw. der Bratvorrichtung verwirklicht werden, ohne dass der Speicher ausgebaut/entfernt werden muss.

Alternativ zu der zuvor genannten "Bypass-Variante" kann auch für den Reinigungsvorgang der Speicher für das Brathilfsmittel aus dem Handgriff entnommen und durch einen entsprechenden Reinigungsmittelspeicher ersetzt werden, insbesondere kann hierbei auch der Druckgasspeicher ersetzt/entfernt werden. Hiermit wird ermöglicht, dass ein besonders großes Reinigungsvolumen zur Verfügung steht und somit eine vorteilhafte bzw. umfassende Reinigung des Verteilersystems realisierbar ist. Das heißt, dass der Reinigungsmittelspeicher den Bauraum des Speichers für das Brathilfsmittels und/oder für den Druckgasspeicher (innerhalb des Handgriffes) beanspruchen kann.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: einen schematischen Schnitt durch eine erste Bratvorrichtung gemäß der Erfindung,
- Figur 2: einen schematischen Schnitt durch eine zweite Bratvorrichtung gemäß der Erfindung mit einem Handgriff in Bratstellung und in Löschstellung während dem Ausströmen von Löschmittel,
- Figur 3: einen schematischen Schnitt durch eine dritte Bratvorrichtung gemäß der Erfindung mit einer ersten Dosiereinheit zum Dosieren von Brathilfsmittel,
- Figur 4: eine schematischen Schnitt durch eine vierte Bratvorrichtung gemäß der Erfindung mit einer zweiten Dosiereinheit zum Dosieren von Brathilfsmittel,
- Figur 5: einen schematischen Schnitt durch eine fünfte Bratvorrichtung gemäß der Erfindung mit einer dritten Dosiereinheit zum Dosieren von Brathilfsmittel,
- Figur 6: eine schematische Draufsicht auf die fünfte Bratvorrichtung gemäß Figur 5 während dem Verdüsen von Brathilfsmittel und
- Figur 7: eine schematische Draufsicht auf die fünfte Bratvorrichtung gemäß Figur 5.

In den Figuren sind verschiedene Bratpfannen dargestellt, die im Wesentlichen einen Pfannenkörper 1 sowie einen Handgriff 9 aufweisen. Generell ist anzumerken, dass ein Pfannenboden 14 im Wesentlichen eine Bratfläche 14 bildet, jedoch durchaus auch Teile/Abschnitte bzw. Flächen einer Seitenwand 15 als Bratfläche wirken.

Gemäß der Erfindung ist eine Löscheinheit 17 vorgesehen, die wenigstens einen Löschmittelspeicher 16, insb. eine Druckgaspatrone 16 und im Sinn der Erfindung zumindest eine Dosieröffnung 18 bzw. Austrittsöffnung 18 an einer Außenfläche des Handgriffes 9 aufweist. In vorteilhafter Weise wird die Dosieröffnung 18 bzw. Austrittsöffnung 18 als eine Löschdüse 18 realisiert. Die Löschdüse 18 ermöglicht eine vorteilhafte Verteilung bzw. ein Verspayen/Zerstäuben oder ggf. Vernebel des Löschmittels. Vorliegend ist lediglich beispielhaft ein Löschgas dargestellt, das in der Druckgaspatrone 16 gespeichert und mit Druck beaufschlagt ist.

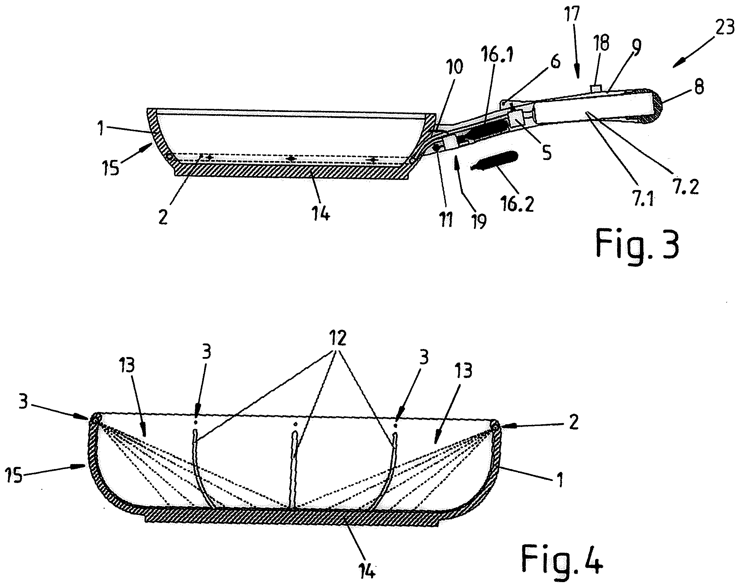

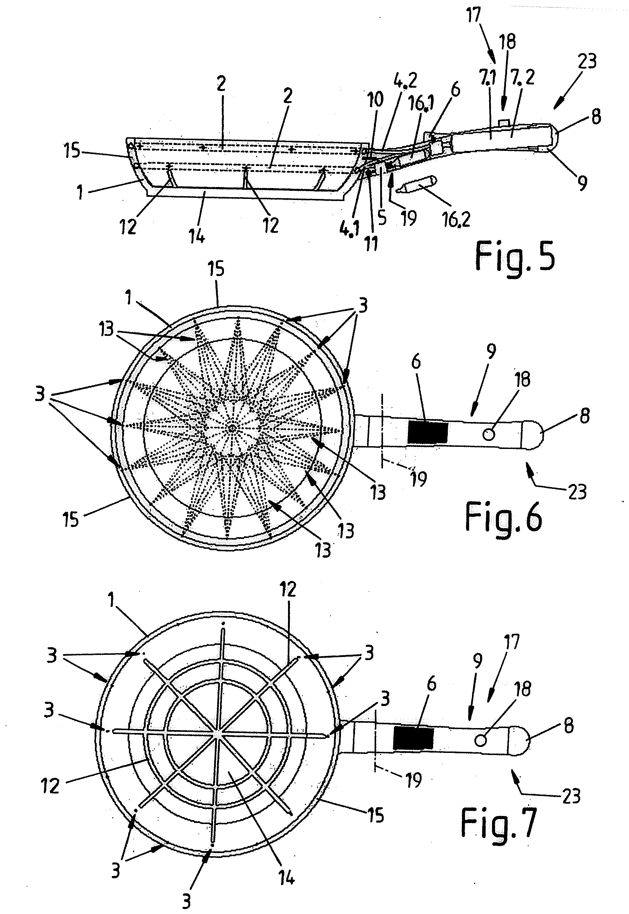

Es können jedoch auch andere Löschmittelfluide wie Löschschaum, Löschwasser, Löschpulver/-puder oder dergleichen verwendet werden. Hierbei ist z.B. eine vorteilhafte Variante realisierbar, wobei u.a. neben der Druckgaspatrone 16 ein zweiter Speicher bzw. eine separate Kartusche 7 zum Speichern des Löschmittels von Vorteil ist. Dies kann ähnlich den Varianten gemäß den Figuren 3 oder 5 umgesetzt werden, wobei jedoch nachfolgend diese Varianten für ein zusätzliches, optionales Speichern eines Brathilfsmittels beschrieben wird. Eine entspr. "Übertragung" bzw. Verwendung der Kartusche 7 als (austauschbarer) Löschmittelspeicher 7, wobei das Löschmittel im Sinn der Erfindung aus der Löschdüse 18 bzw. Dosier-/ Austrittsöffnung 18 an der Außenfläche des Handgriffes 9 austritt, ist jedoch lediglich aus Gründen der Übersichtlichkeit in den entspr. Figuren nicht näher dargestellt.

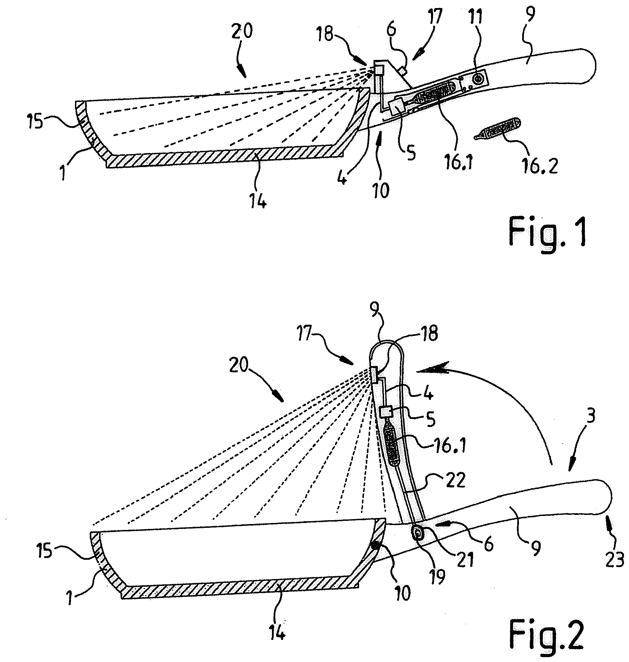

Vorteilhafterweise umfassen diese Varianten gemäß den Figuren 3 bis 7 und zudem die vorteilhafte Variante gemäß Figur 2 jeweils eine Schwenkachse 19 zum Verschwenken/Verstellen eines Teils des Handgriffes 9. Hiermit kann wie aus Figur 2 ersichtlich der Handgriff 9 bzw. ein Großteil des Handgriffes 9 ausgehend von einer dargestellten Normalstellung bzw. nahezu horizontalen Stellung in vorteilhafter Weise nach oben, d.h. in vertikaler Richtung nach oben, verschwenkt werden, so dass in einer Löschstellung des Handgriffes 9 die Löschdüse 18 ein Löschen eines nicht näher dargestellten Brandes bzw. ein Feuer im Pfannenkörper 1 in vorteilhafter Weise löschen kann. Von besonderem Vorteil ist hierbei, dass eine sog. freie Endhälfte 23 des Handgriffes 9 die Löschdüse 18 umfasst. Vorzugsweise ist die Löschdüse möglichst weit am Ende anzuordnen, so dass sie im hochgeschenkten bzw. umgeklappten Zustand und somit in der Löschstellung des Handgriffes 9 möglichst weit oben positioniert ist. Dies ermöglicht ein vorteilhaftes Löschen bzw. ein vorteilhafte Löschrichtung/-strömung des Löschmittelstrahles 20.

Zur Veranschaulichung ist in Figur 2 schematisch ein Ausströmen eines Löschmittels 20 bzw. Löschstrahles in einer Löschphase dargestellt.

Vorteilhafterweise wird der Löschvorgang bzw. die Löschphase durch das Verschwenken im Wesentlichen mechanisch (und/oder hydraulisch/pneumatisch) ausgelöst. Hierzu ist denkbar, dass zum Beispiel ein Exzenterelement 21 derart ausgebildet ist, dass durch das Verschenken ein in einer vorteilhaften Führung in Längsrichtung verstellbarer Stabelement 22 bzw. ein Druckstab 22 auf die Druckgaspatrone 16 einwirkt bzw. diese etwas in Längsrichtung verstellt/bewegt, so dass diese "angestochen" bzw. ein Ventil 4 öffnet. Hierbei strömt das Löschgas 20, z.B. Kohlendioxid 20, über eine Zuleitung 4 zur Löschdüse 18 und der Löschstrahl 20 strömt bzw. tritt aus. Das bedeutet, dass z.B. im Fall eines Brandes im Pfannenkörper durch das Hochschwenken bzw. Hochklappen des Handgriffes 9 durch einen Nutzer das Löschmittel 20 ausströmt und den Brand bzw. das Feuer in vorteilhafter Weise löscht. Dies führt zu einer besonders hohen Sicherheit im Notfall.

Darüber hinaus ist u.a. in Figur 2, aber auch in den Figuren 1, und 3, ein vorteilhafter Temperatursensor 10 lediglich schematisch dargestellt, der in einer besonderen Weiterbildung der Erfindung einen Löschvorgang unterstützen kann bzw. z.B. mittels einem Steuerventil 5 oder dergleichen das Ausströmen des Löschmittels 20 kontrolliert. Bei der Variante gemäß Figur 2 ist der Temperatursensor 10 in der Seitenwand 15 integriert und ist z.B. als IR-Temperatursensor 10 ausgebildet. Hierzu kann in vorteilhafter Weise ein IR-Licht durchlässiges Abdeckelement vorgesehen werden, z.B. ein (Ceran-)Glas oder dergleichen, das den Temperatursensor 10 gegenüber den Nahrungsmitteln bzw. dem Innenraum des Pfannenkörpers schützt bzw. abdeckt/abdichtet.

Die vorteilhafte Variante gemäß Figur 1 weist einen Aufbau 17 als Löscheinheit 17 auf, der am Handgriff 9 fest fixiert ist und die Löschdüse 17 umfasst. Zudem weist dieser Aufbau 17 einen Druckknopf 6 bzw. Schalter 6 auf, der den Löschvorgang auslösen kann. Dementsprechend wird hier manuell durch betätigen bzw. drücken des Schalters 6 der Löschvorgang vom Nutzer ausgelöst.

Weiterhin ist ein akustischer Signalgeber 11 vorgesehen, der z.B. vor und/oder einem Brand bzw. einer kritischen bzw. definierten Temperatur einen akustischen Alarm generiert. Alternativ oder in Kombination hierzu kann auch ein optischer Alarm bzw. ein optisches Signal vorgesehen werden.

Der Pfannenkörper 1 weist bei manchen Varianten der Erfindung gemäß den Figuren 3 bis 7 eine oder mehrere optionale Ringleitungen 2 auf, die z.B. in einer Seitenwand 15 des Pfannenkörpers 1 integriert sind. Hiermit kann bei Bedarf Brathilfsmittel wie Bratöl oder dergleichen dem Bratkörper 1 zudosiert werden (vgl. Figuren 4 oder 6). Die Seitenwand 15 erhebt sich über eine Bratfläche 14 des Pfannenbodens 14, wobei z.B. die Ringleitung 2 und/oder Dosieröffnungen 3 bzw. Düsen 3 gemäß der Varianten der Figur 3 knapp über dem Pfannenboden 14 bzw. der Bratfläche 14 angeordnet ist.

In einer alternativen Variante gemäß Figur 4 ist die Ringleitung 2 und/oder Dosieröffnungen 3 bzw. Düsen 3 dagegen nicht knapp über dem Pfannenboden 14 bzw. der Bratfläche 14 angeordnet, sondern im oberen Bereich der Seitenwand 15 und/oder am oberen Rand/Ende der Seitenwand 15. Diese zuletzt genannte Variante weist Vorteile bzgl. der Herstellung und den Kosten auf. Das hat u.a. auch zur Folge, dass ein Sprühstrahl 13 vorteilhafterweise von oben auf das Bratgut bzw. den Pfannenboden 14 trifft. Von den Dosieröffnungen bzw. Düsen 3 abtropfendes Sprühöl gelangt in vorteilhafter Weise über (auf das Zentrum bzw. den Mittelpunkt gerichtete und/oder sternförmig angeordnete/ausgebildete) Leitelemente wie z.B. Nuten, Rillen, offene Kanäle wie konkav eingearbeitete Abtropfrillen 12 oder Erhebungen, Stege oder dergleichen auf den Pfannenboden 14 bzw. die Bratfläche 14, wo es von dort aus pfannenbodenseitig das Bratgut "bedienen" kann. Das bedeutet, dass das Öl vollständig bzw. optimal zum Braten verwendet bzw. ausgenützt wird und somit das Braten bzw. "fettarme" Braten effizienter gestaltet.

Vorzugsweise sind die Dosieröffnungen 3 bzw. Düsen 3 nahezu gleichmäßig bzw. symmetrisch am Umfang der Bratfläche 14 bzw. der Seitenwand 15 angeordnet, das heißt insbesondere über den gesamten Umfang der Seitenwand 15 gleichmäßig verteilt wie dies z.B. bei den Ausführungsbeispielen gemäß Figur 4 und 6 deutlich wird.

Gemäß der fünften Variante der Erfindung (vgl. Figuren 5 bis 7) sind nicht nur ein o.g. Ringkanal 2 mit mehreren Dosieröffnungen 3 bzw. Düsen 3 vorhanden, sondern in vorteilhafter Weise zwei in vertikaler Richtung übereinander angeordneter Ringkanäle 2 mit beispielsweise insgesamt 16 Düsen 3 bzw. 16 Dosieröffnungen 3. Die Seitenwand 12 des Pfannenkörpers 1 umfasst diese beiden Ringkanäle 2.

Das bedeutet, dass die beiden abgebildeten Rindüsensysteme bzw. Ringkanäle 2 in zwei unterschiedlichen Ebenen angeordnet sind. Die Dosieröffnungen 3 bzw. Düsen 3 der beiden Ringkanäle 2 sind zudem in vorteilhafter Weise (in Umfangsrichtung betrachtet) um ca. 22,5° zueinander versetzt angeordnet. Zudem können die Dosieröffnungen 3 bzw. Düsen 3 in vertikaler Richtung betrachtet unterschiedliche Dosier- bzw. Ausströmrichtungen, d.h. Neigungen bzw. Winkel, aufweisen, so dass das Bratöl 13 bzw. die Sprühstrahlen 13 unterschiedlich steil in den Innenraum bzw. auf die Bratfläche bzw. den Pfannenboden 14 und somit auf das nicht näher dargestellte Bratgut treffen.

Die Dosieröffnungen 3 bzw. Düsen 3 der unteren und/oder oberen Ringleitung 2 können z.B. etwas zum Pfannenboden 14 geneigt ausgebildet werden, damit das gesprühte Würzöl entlang der Sammel-/Ablaufkanäle 12 (vgl. Figur 7) auf den Pfannenbodengrund 14 fließen kann. Das Brathilfsmittel wie ein Würzöl oder dergleichen kann dadurch zusätzlich vom Pfannenbodengrund 12 auf das Bratgut einwirken.

Weiterhin können die Dosieröffnungen 3 bzw. Düsen 3 der unteren und/oder oberen Ringleitung 2 in Bezug zur horizontalen Ebene unterschiedlich ausgerichtet/geneigt werden, so dass das Brathilfsmittel wie ein Würzöl oder dergleichen in unterschiedlicher Weise/Richtung bzw. Auftreffstellen auf das Bratgut einwirken kann. Beispielsweise können die Dosieröffnungen 3 bzw. Düsen 3 des oberen Ringkanals 2 relativ stark geneigt bzw. steil ausgerichtet werden, wie z.B. gemäß der vierten Variante in Figur 4). Dagegen können die Dosieröffnungen 3 bzw. Düsen 3 des unteren Ringkanals 2 leichter bzw. weniger stark geneigt, d.h. relativ flach ausgerichtet werden.

In den einigen Ausführungsbeispielen ist der Ringkanal 2 als geschlossener, durchgängiger Ringkanal 2 ausgebildet. Darüber hinaus ist jedoch auch denkbar, dass es sich beim Ringkanal 2 nicht um einen geschlossenen, durchgehenden Ring handelt, sondern um einen Ringkanal, der insbesondere auf der dem Handgriff 9 gegenüberliegenden Seite nicht vollständig geschlossen bzw. unterbrochen ausgebildet ist. Dies kann beispielsweise bei einer Verteilung der Düsen 3 über einen Bereich von etwa zwei Drittel des Umfangs durchaus von Vorteil sein.

Wie vor allem in den Figuren 1, 2, 3 und 5 deutlich wird, umfasst der Handgriff 9 zumindest einen oder mehrere Speicher bzw. eine (mit Druck beaufschlagte) Kartusche 7 und/oder Druckgaspatrone 16 zum Speichers des Löschmittels und insbesondere auch zum Speicherns eines Brathilfsmittels wie Bratöl, Gewürzöl oder dergleichen vorgesehen.

Gemäß den Varianten der Figuren 1 oder 2 ist ein einziger druckbeaufschlagter Speicher 16 zur Speicherung des Löschmittels vorgesehen, der vorzugsweise unter Druck von einigen Bar steht. So kann das Betriebsmittel bzw. Löschmittel und ggf. das Brathilfsmittel mittels eines vorteilhaften Dosierknopfes 6 bzw. einer Dosiervorrichtung, die ein Ventil 5 betätigt bzw. öffnet und schließt, in eine Zuleitung 4 bzw. einen Kanal des Handgriffs 9 zugeführt bzw. zudosiert werden.

Die Zuleitung 4 für das Brathilfsmittel mündet in den Ringkanal 2 und dieser in die Dosieröffnungen 3 bzw. Düsen 3 des Pfannenkörpers 1.

In vorteilhafter Weise weist die Kartusche 7 eine Druckbeaufschlagung auf, so dass durch Drücken des Dosierknopfes 6 das Ventil 5 betätigt/geöffnet wird und das Betriebsmittel 13 bzw. Löschmittel 20 und insbesondere das Brathilfsmittel 13 wie Öl oder dergleichen über die (jeweilige) Zuleitung 4 zur Löschdüse 18 und ggf. z.B. in den Ringkanal 2 einströmt und jeweils über die Düsen 3, 18 (wie in Figur 2, 4 oder 6 veranschaulicht) in vorteilhafter Weise in den Innenraum/Innenbereich des Pfannenkörpers 2 eingesprüht bzw. vernebelt wird.

Bei den Varianten gemäß Figur 3 oder 5 bis 7 sind jeweils zwei separate Speicher 7, 16 vorgesehen, wobei eine Kartusche 7 mit Betriebsmittel bzw. Löschmittel 20 und/oder ggf. mit das Brathilfsmittel/Bratöl 13 bzw. Gewürzöl und/oder Reinigungsflüssigkeit/-mittel und zudem im Handgriff 9 eine Druckgaspatrone 16 vorhanden ist.

Gerade die Figuren 4 und 6 verdeutlichen, dass das Brathilfsmittel 13 bzw. das Bratöl 13 vergleichsweise großflächig und gleichmäßig in den Bratkörper 1 bzw. auf die Bratfläche 14 verteilt wird. Im Gegensatz zu einem Einbringen von Bratöl bzw. Bratfett mittels einer separaten Ölflasche oder einem einzigen Bratfettstück wird gemäß der Erfindung eine besonders großflächige bzw. gleichmäßige und somit vorteilhafte Verteilung des Bratöls bzw. Brathilfsmittels erreicht. Hiermit kann die Menge, die in den Pfannenkörper 1 eingebracht wird, deutlich reduziert werden, ohne dass dies Nachteile für das Braten des Nahrungsmittels bedeuten würde.

Bei der Kartusche 7 bzw. dem Speicher 7, 16 im Handgriff 9 handelt es sich in vorteilhafter Weise um eine auswechselbare Kartusche 7 bzw. Druckgaspatrone 16 (vgl. Ersatzkartusche 16.1 gemäß Figuren 1, 3 oder 5), die beispielsweise mit Hilfe eines abnehmbaren/abschraubbaren Verschlussknopfs 8 bzw. einen Schraubdeckel in den Handgriff 9 eingebracht werden können. Der Verschlussknopf 8 ist beispielsweise mittels einem Schraubgewinde ausgestattet, so dass die Kartusche 7 beispielsweise im Bereich des Ventiles 5 durch das Anschrauben des Verschlussknopfes 8 sicher und fest fixiert und vorteilhaft abgedichtet wird. Die Druckgaspatrone 16 kann z.B. über einen separaten Zugang ausgewechselt werden, der auf der Unterseite des Handgriffes 9 vorgesehen ist.

Durch die Auswechselbarkeit der Druckgaspatrone 16 und/oder Kartusche 7 kann ein Löschmittelspeicher 16 und beispielsweise eine Betriebsmittelkartusche 7.1 im Handgriff 9 verwendet werden. Zum Reinigen kann beispielsweise eine Reinigungskartusche 7.2 im Handgriff 9 platziert/eingesetzt werden. Gemäß der Erfindung handelt es sich bei der Druckpatrone 16 um eine Löschpatrone 16, die ein mit Druck beaufschlagtes Löschmittel, insbesondere Kohlenstoffdioxid umfasst.

Die Verwendung der Druckgaspatrone 16 und/oder der Kartuschen 7 ist in den Figuren lediglich schematisch dargestellt, wobei in den dargestellten Varianten gemäß Figuren 1 oder 2 lediglich eine einzige Druckpatrone 16 im Handgriff 9 abgebildet ist.

Alternativ können z.B. auch zwei separate Speicher bzw. Kartuschen 7 im Handgriff 9 verwendet werden (vgl. Figuren 3, 5), wobei beispielsweise eine (drucklose) Bratölkartusche 7.1 im unmittelbaren Bereich des Ventiles 5 bzw. Dosierknopfes 6 angeordnet ist und vorzugsweise im Endbereich des Handgriffes 9, das heißt dem Abschnitt des Handgriffes 9 der dem Pfannenkörper gegenüberliegend angeordnet ist, kann eine zweite Kartusche 7, insbesondere eine Druckgaskartusche bzw. Druckgaspatrone 16, angeordnet werden. In diesem Fall wird in vorteilhafter Weise beim Betätigen des Dosierknopfes 6 bzw. beim Öffnen des Ventils 5 in vorteilhafter Weise das Brathilfsmittel bzw. das Bratöl des (drucklosen) Bratölspeichers bzw. der Bratölkartusche 7.1 mit dem Druckgas, insbesondere Kohlenstoffdioxid oder dergleichen, beaufschlagt werden und durch das Verteilersystem bzw. durch die Zuleitung 4 und den Ringkanal 2 zu den Düsen 3 transportiert und verdüst/verteilt werden. Durch den vergleichsweise hohen Druck des Druckgases wird das Bratöl 13 mittels der Düsen 3 in vorteilhafter Weise fein verteilt bzw. versprüht/vernebelt in den Pfannenkörper 1 eingebracht.

Darüber hinaus kann (ohne nähere Darstellung in den Figuren 3 bis 7) in einer besonderen Weiterbildung der Erfindung ein separater bzw. zweiter Betätigungsknopf, insbesondere ein Notknopf bzw. Löschknopf, am/im Handgriff 9 angeordnet werden, der beispielsweise einen als Löschmittelspeicher 16 ausgebildeter Kohlenstoffdioxid-Druckgasspeicher 16 bzw. eine Löschkartusche 7.3 bzw. die Druckgaspatrone 16 im Handgriff 9 betätigt/aktiviert, so dass im Brandfall ein schnelles und wirkungsvolles Löschen im Pfannenkörper 1 gewährleistet ist. Hierbei kann in vorteilhafter Weise, beispielsweise mittels einer Umleitung bzw. eines Bypasses oder dergleichen, das Löschmittel bzw. das Kohlenstoffdioxidgas (ohne Bratöl) in den Pfannenkörper 1 eingebracht werden, so dass der Brand sehr schnell und wirkungsvoll gelöscht wird. Dies erhöht die Betriebssicherheit der Bratvorrichtung gemäß der Erfindung in erheblichem Maß.

In den Figur 1 bis 3 oder 5 ist u.a. jeweils ein Temperatursensor 10 dargestellt, der eine Temperatur des Pfannenkörper 1 bzw. in/an dessen Inneren oder dessen Seitenwand 15 in vorteilhafter Weise erfassen kann. Vorzugsweise ist der Temperatursensor 10 als Bimetall-Element, Wärmedehnungselement oder dergleichen ausgebildet, so dass in vorteilhafter Weise eine elektrische Energieversorgung/- speicherung etc. für einen elektrischen Sensor entfallen kann.

Vorteilhafterweise bewirkt der Temperatursensor 10 z.B. bei einer ersten Temperatur, insb. einer Warntemperatur, dass ein Warnsignal/Warnton von einem akustischen Signalgeber/Signalhorn 11 generiert wird. Hierbei wird vorzugsweise mittels der Druckgaspatrone 16 Druckgas dem Signalgeber/Signalhorn 11 zugeleitet/geführt, so dass das strömende Gas ein Signalton bzw. möglichst schrillen Ton erzeugt bzw. von sich gibt. Dies warnt eine Person in vorteilhafter Weise, dass eine Überhitzung und/oder eine Brandgefahr besteht.

Bei einer zweiten Temperatur, insb. einer im Vergleich zur ersten höheren Temperatur/Brandtemperatur, wird gemß der Erfindung ein Löschvorgang generiert. Hierbei wird vorzugsweise mittels der Druckgaspatrone 16 Löschgas bzw. Druckgas verwendet, so dass wie bereits oben etwas dargelegt das Gas den Brand löscht. Somit kann ein zweistufiges Sicherheitskonzept/-system realisiert werden, nämlich in einer ersten Stufe wird ein Warnton bzw. eine Warnung verwirklicht und in einer zweiten Stufe wird ein Brand gelöscht. Dies führt zu einer außergewöhnlichen und neuen Sicherheitspfanne gemäß der Erfindung.

### Bezugszeichenliste

- 1: Pfannenkörper
- 2: Ringleitung
- 3: Düse
- 4: Zuleitung
- 5: Ventil
- 6: Dosierknopf
- 7: Kartusche
- 8: Verschlussknopf
- 9: Handgriff
- 10: Temperatursensor
- 11: Signalgeber
- 12: Kanal
- 13: Sprühstrahl
- 14: Pfannenboden
- 15: Seitenwand
- 16: Druckgaspatrone
- 17: Löscheinheit
- 18: Löschdüse
- 19: Schwenkachse
- 20: Löschstrahl
- 21: Exzenter
- 22: Druckstab

## Patentansprüche

1. Bratvorrichtung zum Braten von Nahrungsmitteln, wobei wenigstens ein eine Außenfläche umfassender Handgriff (9) sowie ein eine Bratfläche (14) und eine Seitenwand (15) aufweisender Bratkörper (1) zur Aufnahme der Nahrungsmittel vorgesehen sind, wobei der Handgriff (9) wenigstens einen Speicher (7, 16) zum Speichern eines Betriebshilfsmittels (13, 20) umfasst, wobei wenigstens eine zumindest eine Dosieröffnung (18) umfassende Dosiereinheit (17, 18) zum Dosieren des Betriebshilfsmittels (13, 20) vorgesehen ist, wobei eine Außenfläche des Handgriffs (9) wenigstens die Dosieröffnung (18) der Dosiereinheit (17, 18) aufweist, wobei der Speicher (7, 16) als Löschmittelspeicher (7, 16) zum Speichern eines Löschmittels (20) zum Löschen eines Brandes ausgebildet ist, so dass die Dosieröffnung (18) als Austrittsöffnung (18) zum Ausströmen des Löschmittels (20) an die Atmosphäre/Luft ausgebildet ist, **dadurch gekennzeichnet, dass** wenigstens ein Druckgasspeicher (16) zur Druckbeaufschlagung des Löschhilfsmittels (20) vorgesehen ist.

2. Bratvorrichtung nach Anspruch 1, **dadurch gekennzeichnet, dass** wenigstens eine Verstelleinheit zum Verstellen wenigstens eines Teils des Handgriffes (9) vorgesehen ist, wobei die Verstelleinheit derart ausgebildet ist, dass der verstellbare Teil des Handgriffes (9) wenigstens teilweise in vertikaler Richtung verstellbar ist.

3. Bratvorrichtung nach Anspruch 2, **dadurch gekennzeichnet, dass** die Verstelleinheit wenigstens eine Schwenkachse (19) zum Verschenken wenigstens des verstellbaren Teils des Handgriffes (9) aufweist.

4. Bratvorrichtung nach einem der vorgenannten Ansprüche, **dadurch gekennzeichnet, dass** die Dosiereinheit (17, 18) wenigstens eine Betätigungsvorrichtung (6) zum Betätigen der Brandlöschung und/oder zum Betätigen des Ausströmens des Löschmittels (20) umfasst.

5. Bratvorrichtung nach einem der vorgenannten Ansprüche, **dadurch gekennzeichnet, dass** der Handgriff (9) eine erste, am Bratkörper (1) angeordnete Endhälfte und eine zweite, freie Endhälfte (23) aufweist, wobei wenigstens die zweite, freie Endhälfte (23) die Austritts-/Dosieröffnung (18) umfasst.

6. Bratvorrichtung nach einem der vorgenannten Ansprüche, **dadurch gekennzeichnet, dass** die Dosiereinheit (17, 18) wenigstens eine die Austritts-/Dosieröffnung (18) aufweisende Spraydüse (18) zum Versprayen bzw. Vernebeln des Löschmittels (20) aufweist.

7. Bratvorrichtung nach einem der vorgenannten Ansprüche, **dadurch gekennzeichnet, dass** wenigstens ein auswechselbarer Löschmittelspeicher (7, 16) vorgesehen ist.

8. Bratvorrichtung nach einem der vorgenannten Ansprüche, **dadurch gekennzeichnet, dass** wenigstens ein Sensor (10) zur Erfassung einer Temperatur und/oder eines Brandes vorgesehen ist.

9. Bratvorrichtung nach einem der vorgenannten Ansprüche, **dadurch gekennzeichnet, dass** wenigstens eine Kühleinheit (16) zum Kühlen des Handgriffes (9) und/oder des Bratkörpers (1) und/oder der Bratfläche (14) und/oder der Seitenwand (15) und/oder der Nahrungsmittel vorgesehen ist.

## Claims

1. A frying device for frying food, wherein at least one handle (9) comprising an outer surface and a frying body (1) having a frying surface (14) and a side wall (15) are provided for receiving the food, wherein the handle (9) has at least one storage device (7, 16) for storing an operating auxiliary agent (13, 20), wherein at least one metering unit (17, 18) comprising at least one metering opening (18) is provided for metering the operating auxiliary agent (13, 20), wherein an outer surface of the handle (9) has at least the metering opening (18) of the metering unit (17, 18), wherein the storage device (7, 16) is designed as an extinguishing agent storage device (7, 16) for storing an extinguishing agent (20) for extinguishing a fire such that the metering opening (18) is designed as an outlet opening (18) for the outflow of the extinguishing agent (20) to the atmosphere/air, **characterised in that** at least one compressed-gas storage device (16) is provided for pressurising the extinguishing auxiliary agent (20).

2. The frying device according to claim 1, **characterised in that** at least one adjusting unit is provided for adjusting at least a part of the handle (9), wherein the adjusting unit is designed such that the adjustable part of the handle (9) is at least partially adjustable in the vertical direction.

3. The frying device according to claim 2, **characterised in that** the adjusting unit has at least one pivot axis (19) for pivoting at least the adjustable part of the handle (9).

4. The frying device according to any one of the preceding claims, **characterised in that** the metering unit (17, 18) comprises at least one actuating device (6) for actuating the fire extinguishing and/or for actuating the outflow of the extinguishing agent (20).

5. The frying device according to any one of the preceding claims, **characterised in that** the handle (9) has a first end half arranged on the frying body (1) and a second, free end half (23), wherein at least the second, free end half (23) comprises the outlet/metering opening (18).

6. The frying device according to any one of the preceding claims, **characterised in that** the metering unit (17, 18) has at least one spray nozzle (18) having the outlet/metering opening (18) for spraying or atomising the extinguishing agent (20).

7. The frying device according to any one of the preceding claims, **characterised in that** at least one replaceable extinguishing agent storage device (7, 16) is provided.

8. The frying device according to any one of the preceding claims, **characterised in that** at least one sensor (10) is provided for detecting a temperature and/or a fire.

9. The frying device according to any one of the preceding claims, **characterised in that** at least one cooling unit (16) is provided for cooling the handle (9) and/or the frying body (1) and/or the frying surface (14) and/or the side wall (15) and/or the food.

## Revendications

1. Dispositif de rôtisserie pour rôtir des aliments, dans lequel sont prévus au moins une poignée (9) comprenant une surface extérieure et un corps de rôtissage (1) présentant une surface de rôtissage (14) et une paroi latérale (15) pour la réception des aliments, la poignée (9) comprenant au moins un réservoir (7, 16) pour stocker un agent auxiliaire de traitement (13, 20), au moins une unité de dosage (17, 18) comprenant au moins une ouverture de dosage (18) étant prévue pour doser l'agent auxiliaire de traitement (13, 20), une surface extérieure de la poignée (9) présentant au moins l'ouverture de dosage (18) de l'unité de dosage (17, 18), le réservoir (7, 16) étant conçu comme un réservoir d'agent d'extinction (7, 16) pour stocker un agent d'extinction (20) destiné à éteindre un feu, de sorte que l'ouverture de dosage (18) est conçue comme une ouverture de sortie (18) pour l'écoulement de l'agent d'extinction (20) dans l'atmosphère/l'air, **caractérisé en ce qu'**au moins un réservoir de gaz comprimé (16) pour pressuriser l'agent auxiliaire d'extinction (20) est prévu.

2. Dispositif de rôtisserie selon la revendication 1, **caractérisé en ce qu'**au moins une unité de réglage est prévue pour régler au moins une partie de la poignée (9), l'unité de réglage étant conçue de telle sorte que la partie réglable de la poignée (9) soit au moins partiellement réglable dans le sens vertical.

3. Dispositif de rôtisserie selon la revendication 2, **caractérisé en ce que** l'unité de réglage présente au moins un axe de pivotement (19) pour dégager au moins la partie réglable de la poignée (9).

4. Dispositif de rôtisserie selon l'une quelconque des revendications précédentes, **caractérisé en ce que** l'unité de dosage (17, 18) comprend au moins un dispositif d'actionnement (6) pour actionner l'extinction et/ou actionner l'écoulement de l'agent d'extinction (20).

5. Dispositif de rôtisserie selon l'une quelconque des revendications précédentes, **caractérisé en ce que** la poignée (9) présente une première moitié d'extrémité disposée sur le corps de rôtissage (1) et une seconde moitié d'extrémité libre (23), au moins la seconde moitié d'extrémité libre (23) comprenant l'ouverture de sortie/de dosage (18).

6. Dispositif de rôtisserie selon l'une quelconque des revendications précédentes, **caractérisé en ce que** l'unité de dosage (17, 18) présente au moins une buse de pulvérisation (18) présentant l'orifice de sortie/de dosage (18) pour pulvériser ou atomiser l'agent d'extinction (20).

7. Dispositif de rôtisserie selon l'une quelconque des revendications précédentes, **caractérisé en ce qu'**au moins un réservoir d'agent d'extinction (7, 16) remplaçable est prévu.

8. Dispositif de rôtisserie selon l'une quelconque des revendications précédentes, **caractérisé en ce qu'**au moins un capteur (10) est prévu pour détecter une température et/ou un feu.

9. Dispositif de rôtisserie selon l'une quelconque des revendications précédentes, **caractérisé en ce qu'**au moins une unité de refroidissement (16) est prévue pour refroidir la poignée (9) et/ou le corps de rôtissage (1) et/ou la surface de rôtissage (14) et/ou la paroi latérale (15) et/ou les aliments.
